# EUROPÄISCHE PATENTANMELDUNG

(11) **EP 1 134 140 A2**
(43) Veröffentlichungstag der Anmeldung: **19.09.2001**
(21) Anmeldenummer: 01105741.1
(22) Anmeldetag: 08.03.2001
(51) Int. Cl.: B60T 8/18

(54) **Automatisch lastabhängiges Bremsdruckregelventil für druckmittelbetätigte Bremsanlagen in Fahrzeugen**

(30) Priorität: 17.03.2000 DE 10013119
(71) Anmelder: Haldex Brake Products GmbH, 69123 Heidelberg (DE)
(72) Erfinder: Schell, Günter, 69181 Leimen (DE); Burmester, Hermann, 69115 Heidelberg (DE)
(74) Vertreter: Patentanwälte Rehberg + Hüppe

(57) **Zusammenfassung**

Ein autmatisch lastabhängiges Bremsdruckregelventil (1) für druckmittelbetätigte Bremsanlagen in Fahrzeugen ist mit einem vom lastabhängigen Druck beaufschlagten und sich auf einer Regelfeder abstützenden Stellkolben (22) versehen, der eine eine Steuerstange (11) des Regelteils des Bremsdruckregelventils (1) steuernde Schrägfläche (38) aufweist. Das pneumatisch angesteuerte Bremsdruckregelventil (1) ist von dynamischer auf statische Wirkungsweise umschaltbar. Es ist ein von einem Druck beaufschlagter Blockierkolben (15) vorgesehen. Der Blockierkolben (15) ist zum Festsetzen des Stellkolbens (22) unter reib- oder formschlüssiger Verbindung zwischen Blockierkolben (15) und Stellkolben (22) ausgebildet und auf einer Rückführfeder (16) abgestützt.

## Beschreibung

Die Erfindung betrifft ein automatisch lastabhängiges Bremsdruckregelventil für druckmittelbetätigte Bremsanlagen in Fahrzeugen, mit einem vom lastabhängigen Druck beaufschlagten und sich auf einer Regelfeder abstützenden Stellkolben, der einer eine Steuerstange des Regelteils des Bremsdruckregelventils steuernde Schrägfläche aufweist, wobei das pneumatisch angesteuerte Bremsdruckregelventil von dynamischer auf statische Wirkungsweise umschaltbar ist. In Verbindung mit druckmittelbetätigten Bremsanlagen für Fahrzeuge, insbesondere Nutzfahrzeuge, sind automatisch lastabhängige Bremsdruckregelventile, oft auch als Bremskraftregler bezeichnet, bekannt, die die Aufgabe haben, je nach Beladungszustand des Fahrzeuges den Bremsdruck zu modulieren. Eine erste Gruppe von solchen Bremsdruckregelventilen wird pneumatisch angesteuert. Kennzeichnend für diese Gruppe ist ein sich auf einer Regelfeder abstützender Stellkolben, der in der Regel vom Balgdruck einer Luftfederanlage des Fahrzeuges beaufschlagt wird. Der Regelteil des Bremsdruckregelventils, der durchsteuernd oder in Relaisbauart ausgebildet sein kann, wird von einer Steuerstange gesteuert, die einen Auslaßsitz trägt. Diese Steuerstange stützt sich wiederum auf einer Schrägfläche ab, die entweder direkt auf dem Stellkolben vorgesehen oder an einem mit dem Stellkolben verbundenen Verstellglied verwirklicht ist. Solche pneumatisch angesteuerten Bremsdruckregelventile sind beim Bremsen von dynamischer auf statische Wirkungsweise umschaltbar, um die Störungen, die durch eine dynamische Achslastverlagerung beim Bremsen auftreten, nicht zur Auswirkung kommen zu lassen. Der ausgesteuerte Bremsdruck soll dem Beladungszustand des Fahrzeuges entsprechen, und zwar ohne den Einfluß dynamischer Achslastverlagerungen.

Eine andere Gruppe von Bremsdruckregelventilen wird mechanisch angesteuert, wobei ein mechanischer Stelltrieb, meist mit Hilfe einer Nockenwelle oder Nockenscheibe vorgesehen ist. Auch solche mechanisch ansteuerbaren Bremsdruckregelventile besitzen einen Regelteil mit einer Steuerstange, wobei jedoch die Steuerstange in ihrer Axialbewegung von dem mechanischen Trieb verstellt bzw. beeinflußt wird. Beim Umschalten von dynamischer auf statische Wirkungsweise wird die Steuerstange festgeklemmt, so daß der Auslaßsitz der Steuerstange an einer Bewegung während des Bremsens gehindert ist.

Ein pneumatisch angesteuertes automatisch lastabhängiges Bremsdruckregelventil der eingangs beschriebenen Art ist aus der DE 40 05 664 A1 bekannt. Zum Umschalten dieses pneumatisch angesteuerten Bremsdruckregelventils von dynamischer Wirkungsweise in statische Wirkungsweise während des Bremsvorgangs ist in die Verbindungsleitung von den Luftfederbälgen zu dem als Tandemkolben ausgebildeten Stellkolben, der sich auf einer Regelfeder abstützt, ein Sperrventil in Form eines Schiebers eingeschaltet, der von dem dem Bremsdruckregelventil zugeleiteten Steuerdruck beaufschlagt wird. Sobald ein Steuerdruck am Eingang zu dem Bremsdruckregelventils auftritt, wird das Sperrventil umgeschaltet und damit die Verbindungsleitung von den Luftfederbälgen zum Stellkolben abgesperrt. Dadurch wird bewirkt, daß sich der Stellkolben bei dynamischen Achslastverlagerungen gegenüber seiner Regelfeder nicht mehr bewegen kann, so daß auch keine Verstellung der Steuerstange des Regelteils stattfindet. Nach Beendigung des Bremsvorgangs kehrt das Sperrventil wieder in seine Durchgangsstellung zurück, weil der Steuerdruck zum Bremsdruckregelventil wegfällt.

Aus der DE 196 29 975 C1 ist ebenfalls ein pneumatisch angesteuertes Bremsdruckregelventil bekannt. Auch hier ist in der Verbindungsleitung von den Luftfederbälgen zu dem sich auf der Regelfeder abstützenden Stellkolben ein Sperrventil vorgesehen, welches als Magnetventil ausgebildet ist und elektrisch über Signale einer ABS-Anlage gesteuert wird, so daß das Bremsdruckregelventil damit von dynamischer Wirkungsweise auf statische Wirkungsweise umschaltet. Das Absperrventil wird hier also nicht mehr pneumatisch, sondern elektrisch angesteuert. Es ergibt sich insoweit die Möglichkeit, ein elektrisches Signal von einer ohnehin an dem Nutzfahrzeug vorhandenen ABS-Elektronik abzuleiten und mit diesem Signal das Magnetventil anzusteuern. Damit kann ein den Fahrzustand des Nutzfahrzeuges wiedergebendes Signal zum Umschalten benutzt werden, so daß beim Fahren auftretende Stöße und Schwingungen nicht zu einer Bewegung des Stellkolbens und/oder der Steuerstange führen können.

Andererseits sind mechanisch angesteuerte Bremsdruckregelventile bekannt, beispielsweise aus der DE-AS 1 934 784. Das dort beschriebene Bremsdruckregelventil besitzt einen Regelteil, der durchsteuernd ausgebildet ist. Es ist ein Sternkolben vorgesehen, der mit einer im Gehäuse eingespannten Membran zusammenarbeitet. Auf der Aussteuerseite des Regelteils ist ein als Ringkolben ausgebildeter Blockierkolben im Gehäuse gleitend und dichtend gelagert, der die Steuerstange umgibt. An der Steuerstange greift andererseits ein mechanischer Stelltrieb an, der sich je nach Beladungszustand des Fahrzeuges verdreht und damit die axiale Lage der Steuerstange mit dem Auslaßsitz relativ zum Einlaßsitz festlegt. Der als Ringkolben ausgebildete Blockierkolben wird vom ausgesteuerten Druck beaufschlagt und wirkt auf ein als Tellerfeder ausgebildetes Sperrglied ein, welches im Bremsfalle an der Steuerstange angreift und diese festsetzt. Die Steuerstange wird während einer Bremsung durch Reibschluß festgehalten. Nachteilig hieran ist einerseits, daß die Tellerfeder die Steuerstange beschädigen kann. Andererseits ist nicht sichergestellt, daß die Tellerfeder über den Umfang der Steuerstange gleichmäßig zur Einwirkung kommt. Es besteht die Gefahr, daß beim Festsetzen der Steuerstange deren Achse geringfügig verlagert, insbesondere gekippt wird, wobei die Dichtheit des Auslaßventils leidet.

Auch die DE 32 35 358 C2 zeigt ein mechanisch angesteuertes Bremsdruckregelventil. Die Steuerstange ist hier zweiteilig ausgebildet, wobei zwischen die beiden Teile der Steuerstange eine Ausgleichsfeder eingeschaltet ist. Der Raum unterhalb des Regelteils des Bremsdruckregelventils wird durch eine Trennwand abgedichtet, die im Gehäuse gelagert ist. Die Trennwand kann zur Abdichtung und Lagerung des oberen Teils der Steuerstange genutzt werden. Unterhalb der Trennwand ist ein elastischer Ring als Klemmelement für den oberen Teil der Steuerstange vorgesehen, der vom ausgesteuerten Bremsdruck beaufschlagt wird. Auch hier wird der obere Teil der Steuerstange durch radial einwirkende Kräfte reibschlüssig festgesetzt. Bewegungen des mechanischen Stelltriebes im festgesetzten Zustand werden von der Ausgleichsfeder aufgenommen.

Die DE 41 10 355 A1 zeigt schließlich ein weiteres mechanisch angesteuertes Bremsdruckregelventil, das eine die Steuerstange umgebende Verriegelungs- bzw. Blockiereinheit aufweist, deren wesentliche Bestandteile ein als Ringkolben ausgebildeter Blockierkolben und ein kraftumlenkendes bzw. kraftübersetzendes Element sind. Die beim Bremsen auf den Blockierkolben ausgeübte Kraft wird von ihrer axialen Richtung in radialer Richtung umgelenkt und auf die Steuerstange zum Festsetzen übertragen.

Derartige mechanisch angesteuerte Bremsdruckregelventile, die zum Festsetzen an der Steuerstange radial angreifen, besitzen grundsätzlich die oben erwähnten Nachteile. Sie sind meist aufwendig gestaltet und weisen eine Anzahl Einzelteile auf, die dazu dienen, die von dem Blockierkolben ausgeübte Axialkraft in eine Radialkraft zum Festhalten der Steuerstange umzuformen.

Der Erfindung liegt die Aufgabe zugrunde, ein pneumatisch angesteuertes Bremsdruckregelventil der eingangs beschriebenen Art aufzuzeigen, das bei geringerem Bauaufwand von dynamischer Wirkungsweise auf statische Wirkungsweise umschaltbar ist und bei dem die Steuerstange im Umschaltfalle frei von durch den Umschaltvorgang bewirkten Querkräften bleibt.

Erfindungsgemäß wird dies bei einem automatisch lastabhängigen Bremsdruckregelventil der eingangs beschriebenen Art dadurch erreicht, daß ein von einem Druck beaufschlagter Blockierkolben vorgesehen ist und daß der Blockierkolben zum Festsetzen des Stellkolbens unter reib- oder formschlüssiger Verbindung zwischen Blockierkolben und Stellkolben ausgebildet und auf einer Rückführfeder abgestützt ist.

Die Erfindung geht von dem Gedanken aus, die im Stand der Technik bekannten Absperrventile in der Verbindungsleitung zwischen den Luftfederbälgen und dem Wirkraum des Stellkolbens zu vermeiden und innerhalb des Bremsdruckregelventils die Umschaltung von dynamischer Wirkungsweise auf statische Wirkungsweise zu ermöglichen. Es wird ein von mechanisch ansteuerbaren Bremsdruckregelventilen bekannter Blockierkolben benutzt. Dessen im Bremsfalle ausgeübte Kraft wird jedoch nicht um 90° umgeleitet und radial an der Steuerstange zur Einwirkung gebracht, sondern an anderer Stelle des Bremsdruckregelventils. Die Bewegungsrichtung des Stellkolbens ist ohnehin bereits um 90° gedreht zur Bewegungsrichtung der Steuerstange vorgesehen. Diese Relativanordnung wird von der Erfindung genutzt, um den Blockierkolben an dem Stellkolben oder einem mit diesem verbundenen Verstellglied angreifen zu lassen. Es erübrigt sich damit auch die Anordnung gesonderter kraftumlenkender Elemente. Die ohnehin vorhandenen Teile des Bremsdruckregelventils, insbesondere der Stellkolben oder das mit diesem verbundene Verstellglied, werden zum Blokkieren bzw. Festsetzen genutzt. Es entfällt vorteilhaft die Mehrteiligkeit der Steuerstange und die zusätzliche Anordnung einer Ausgleichsfeder. Die Anordnung kann auch so getroffen sein, daß eine im Stand der Technik vorhandene zusätzliche Trennwand in Fortfall kommt, wenn der Blockierkolben als Ringkolben im Bereich der Steuerstange angeordnet wird. Durch den Angriff des Blockierkolbens an dem Stellkolben ist der Kraftbedarf zum Festsetzen des Stellkolbens bzw. des Bremsdruckregelventils beim Umschalten von dynamischer auf statische Wirkungsweise im Verhältnis der mechanischen Übersetzung zwischen Schrägfläche und Steuerstange geringer. Durch die ohnehin vorhandene Schrägfläche zwischen dem Stellkolben und der Steuerstange findet also auch eine Kraftübersetzung statt, die hier auch beim Festsetzen genutzt wird. Ein weiterer besonderer Vorteil des neuen Bremsdruckregelventils ist darin zu sehen, daß die das Auslaßventil mitbildende Steuerstange beim Umschalten frei von Querkräften gehalten wird, die aus der reib- oder formschlüssigen Verriegelung resultieren. Diese auf den Stellkolben bei dynamischen Achslastverlagerungen einwirkenden Kräfte wirken auf den Blockierkolben als Querkräfte, die aber gehäuseseitig aufgenommen werden. Die Abschlußstellungen des Doppelventilkörpers im Regelteil werden damit nicht mehr nachteilig beeinflußt und insoweit auch ein eventueller Luftverbrauch und Regelfehler verringert. Die Anwendung einer Rückführfeder schließlich schafft eindeutige Verhältnisse bei dynamischer Wirkungsweise. Verstellbewegungen können sich nicht mehr in einem Reibverschleiß äußern, da bei dynamischer Wirkungsweise sichergestellt ist, daß ein Kontakt des Blockierkolbens zu dem Stellkolben oder zwischen entsprechenden Übertragungsteilen nicht mehr stattfindet.

Der Blockierkolben ist zum Festsetzen des Stellkolbens in den Bewegungsweg des Stellkolbens einfahrbar gelagert. Der Bewegungsweg des Blockierkolbens ist rechtwinklig zum Bewegungswegdes Stellkolbens vorgesehen bzw. ausgerichtet, so daß sich die Möglichkeit bietet, den Blockierkolben koaxial zu der Steuerstange oder an anderer Stelle des Umfangs des Stellkolbens anzuordnen. Es bietet sich aber insbesondere der Platz zwischen dem Regelteil des Bremsdruckregelventils und dem Stellkolben an.

Der Blockierkolben einerseits und der Steuerkolben oder ein mit ihm verbundenes Verstellglied andererseits sind mit einander zugeordneten Anlageflächen versehen, die beim Festsetzen aneinander zur Anlage kommen. Damit wird der Stellkolben reib- oder formschlüssig gehalten. Für die Ausbildung der Anlageflächen am Blockierkolben einerseits und am Stellkolben andererseits gibt es verschiedene Möglichkeiten. Im allgemeinen reicht eine reibschlüssige Ausbildung der Anlageflächen aus. Es ist aber auch möglich, die Anlageflächen mit einer Verzahnung zu versehen, um einen Formschluß zu ermöglichen.

Der Stellkolben und ein die Schrägfläche aufweisendes Verstellglied können einteilig ausgebildet sein. In Verbindung damit ist es möglich, daß die den Sitz des Auslaßventils des Regelteils des Bremsdruckregelventils tragende Steuerstange ebenfalls einteilig ausgebildet ist. Der Blockierkolben ist dann zweckmäßig als Ringkolben ausgebildet und umgibt die Steuerstange. Dies stellt eine konstruktiv vorteilhafte Ausführungsform dar, bei der der Blockierkolben mit seiner Abdichtung zugleich die Abdichtung der Bremskammer des Regelteils bildet, wobei die Anordnung einer gesonderten Trennwand und deren Abdichtung in Fortfall kommt. Da die Bremskammer ohnehin gegenüber dem Raum, in welchem der Stellkolben angeordnet ist, abgedichtet werden muß, übernimmt der Ringkolben auch diese Funktion.

Die Steuerstange kann an ihrem der Schrägfläche zugekehrten Ende eine Rolle tragen, um eine besonders feinfühlige Ausbildung zu realisieren und nur geringe Querkräfte zwischen Schrägfläche und Steuerstange zur Einwirkung kommen zu lassen. Grundsätzlich ist an dieser Stelle zwar auch Gleitreibung möglich. Die übertragenen Querkräfte sind dabei aber in der Regel größer. Die Steuerstange selbst ist verdrehgesichert axialbeweglich. In symmetrischer Anordnung können die Anlageflächen zu beiden Seiten der Schrägfläche an dem Blockierkolben vorgesehen sein, wobei der Blockierkolben in komplementärer Weise Anlageflächen trägt, die als Gegenanlageflächen fungieren. Es versteht sich, daß in aller Regel der Stellkolben im Gehäuse verdrehgesichert axial verschieblich gelagert und geführt ist, damit die an ihm vorgesehene oder mit ihm verbundene Schrägfläche ihre relative Lage zur Steuerstange nicht verlieren kann.

Wenn die Rückführfeder einerseits auf dem Blockierkolben und andererseits auf der Steuerstange abgestützt ist, erfüllt diese nicht nur die Funktion des Rückführens des Blockierkolbens in die Ausgangsstellung zwecks Freigabe der dynamischen Arbeitsweise. Die Rückführfeder dient gleichzeitig dazu, die Steuerstange jederzeit in Anlage an der Schrägfläche zu halten, um jeweils korrekte Abschlußstellungen zu sichern.

Besonders sinnvoll für eine möglichst genaue axiale Führung der Steuerstange in ihrem Bewegungsweg ist es, wenn die Steuerstange einerseits im Regelkolben des Regelteils und andererseits in einer Durchbrechung des Gehäuses des Bremsdruckregelventils geführt ist. Damit ist es möglich, die Steuerstange an zwei relativ weit voneinander beabstandeten Stellen zu führen und einem Verkippen entgegenzuwirken.

Die Erfindung wird anhand bevorzugter Ausführungsbeispiele eines Bremsdruckregelventils weiter erläutert und verdeutlicht. Es zeigen:
- Fig. 1: einen Vertikalschnitt durch ein Bremsdruckregelventil in einer ersten Ausführungsform,
- Fig. 2: einen Schnitt durch das Bremsdruckregelventil der Fig. 1 gemäß der Linie II-II in Fig. 1,
- Fig. 3: einen Horizontalschnitt durch das Bremsdruckregelventil nach der Linie III-III in Fig. 2,
- Fig. 4: eine ähnliche Schnittdarstellung wie Fig. 2 bei einer zweiten Ausführungsform des Bremsdruckregelventils,
- Fig. 5: einen Schnitt gemäß der Linie V-V in Fig. 4,
- Fig. 6: eine ähnliche Schnittdarstellung wie die Fig. 2 und 4 bei einer weiteren Ausführungsform des Bremsdruckregelventils, und
- Fig. 7: einen Schnitt gemäß der Linie VII-VII in Fig. 6.

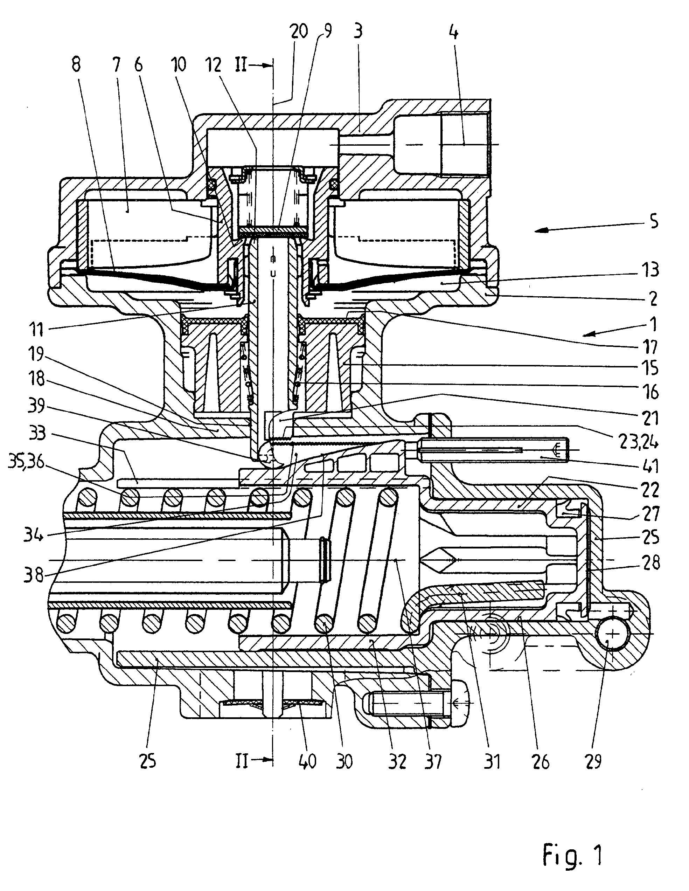

Das in Fig. 1 dargestellte Bremsdruckregelventil 1 weist ein in aller Regel mehrteiliges Gehäuse 2 auf. Im oberen Bereich ist ein Anschlußdeckel 3 vorgesehen. Der Anschlußdeckel 3 weist einen Anschluß 4 für eine (nicht dargestellte) Steuerleitung auf, die von einem Steuerventil herangeführt ist. Im oberen Bereich des Bremsdruckregelventils 1 ist in bekannter Weise ein Regelteil 5 gebildet. Wesentliche Bestandteile des Regelteils 5 sind ein Regelkolben 6, ein rippenförmiger Einsatzkörper 7 und eine zwischen Gehäuse 2 und Anschlußdeckel 3 dichtend eingespannte Membrane 8, die andererseits am Regelkolben 6 dichtend gelagert ist. Im Regelkolben 6, der hohl ausgebildet ist, ist ein Doppelventilkörper 9 federnd aufgehängt, der zusammen mit einem vorstehenden Rand 10 im Regelkolben 6 ein Einlaßventil 9, 10 bildet. Relativ zum Regelkolben 6 ist eine hohle Steuerstange 11 vorgesehen, die an ihrem oberen Ende einen Sitz 12 trägt, der zusammen mit dem Doppelventilkörper 9 ein Auslaßventil 9, 12 bildet. Der Regelteil 5 ist hier in durchsteuernder Bauart ausgebildet. Es versteht sich, daß der Regelteil 5 auch in Relaisbauart verwirklicht sein könnte.

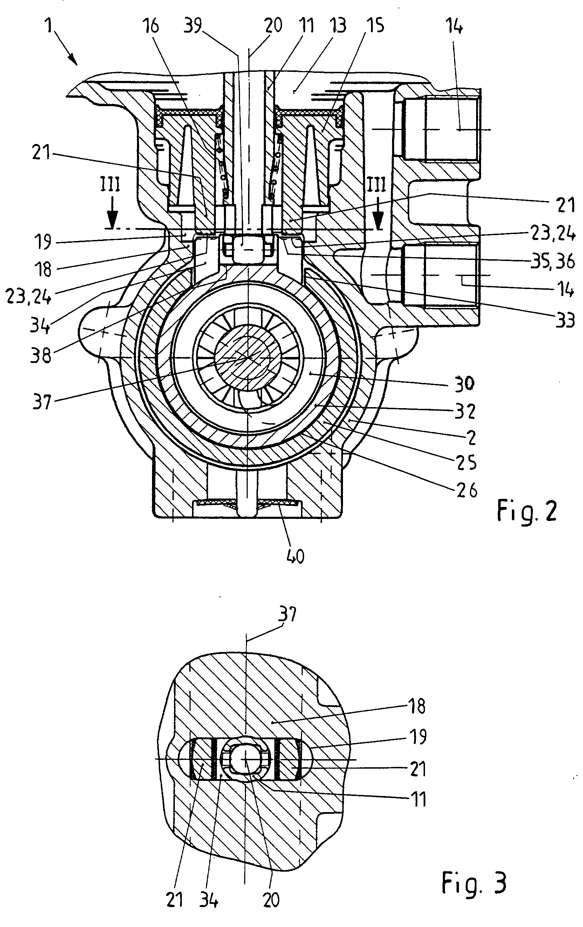

Unterhalb der Membrane 8 ist eine Bremskammer 13 gebildet, die mit einem oder mehreren Anschlüssen 14 (Fig. 2) in stetiger Verbindung steht. Von den Anschlüssen 14 führen nicht dargestellte Leitungen zu den entsprechenden Radbremsen des Fahrzeuges.

Im Mittelbereich des Gehäuses 2 ist ein Blockierkolben 15 gleitend und dichtend gelagert. Der Blockierkolben 15 ist auf einer Rückführfeder 16 abgestützt, die sich andererseits an der Steuerstange 11 abstützt. Die Rückführfeder 16 könnte auch gehäuseseitig abgestützt sein. Der Blockierkolben 16 weist eine Manschette 17 aus elastischem Material auf, mit der er die Bremskammer 13 gehäuseseitig und zugleich zu der Steuerstange 11 abdichtet. Es versteht sich, daß die Abdichtung des Blockierkolbens 15 auch in anderer Weise, beispielsweise zweiteilig, ausgebildet sein könnte. Unterhalb des Blockierkolbens 15 besitzt das Gehäuse 2 eine Stützwand 18 mit einer langlochartigen Durchbrechung 19. Die Form und Anordnung der langlochartigen Durchbrechung 19 ist am besten durch die Zusammenschau der Fig. 1 bis 3 erkennbar. Die langlochartige Durchbrechung 19 dient der separaten Führung unterschiedlicher Bauteile. Zum einen ist hier die hohle Steuerstange 11 gleichsam an ihrem unteren Ende geführt. Ansonsten wird die hohle Steuerstange in ihrem oberen Endbereich mit radial nach außen vorstehenden Rippen am Regelkolben 6 geführt. Die beiden Führungsstellen für die hohle Steuerstange sind damit auf relativ großem Abstand zueinander angebracht, so daß sichergestellt ist, daß die hohle Steuerstange 11 bei Bewegungen in Richtung der Achse 20 des Bremsdruckregelventils 1 verkippsicher gelagert ist. Damit wird der Vorteil erreicht, daß das Auslaßventil 9, 12 in jeder Abschlußstellung seine geschlossene Lage beibehält und ein Verkippen der hohlen Steuerstange 11 vermieden wird. Andererseits dient die langlochartige Durchbrechung 19 aber auch als Führungs- und Abstützstelle für einen im unteren Bereich des Gehäuses 2 verschiebbar und festsetzbar gelagerten Stellkolben 22, wie später noch erläutert wird. Der Blockierkolben 15 ist in seinem oberen Bereich, also benachbart zu der Manschette 17, im Gehäuse 2 geführt. Eine zweite Führungsstelle wird zwischen den Fortsätzen 21 und der langlochartigen Durchbrechung 19 gebildet. Dies ist besonders deutlich aus den Fig. 1 und 3 erkennbar. Damit ist der Blockierkolben 15 im Gehäuse 2 so gelagert, daß er auf ihn einwirkende Querkräfte, die also quer zur Achse 20 wirken, in das Gehäuse 2 ableitet bzw. sich dort abstützt. Die Fortsätze 21 enden stirnseitig nach unten in Anlageflächen 23, die hier mit einer Verzahnung 24 versehen sind. Die Verzahnung 24 weist eine kleine Teilung auf. Die Verzahnung 24 ist im Hinblick auf einen Formschluß vorgesehen. Wenn nur ein Reibschluß gewünscht wird, ist die Anlagefläche 23 ohne Verzahnung 24 ausgebildet.

Im unteren Teil des Bremsdruckregelventils 1 bzw. des Gehäuses 2 ist die pneumatische Ansteuerung untergebracht. Das Gehäuse 2 besitzt hier einen Deckel 25, der in Form eines längsgeschlitzten Ringes relativ weit in das Gehäuse 2 hineinreichend ausgebildet ist, wie sich aus der Zusammenschau der Fig. 1 und 2 ergibt. Dieser Deckel 25 stellt eine Zylinderbohrung 26 für die gleitend verschiebbare Lagerung des Stellkolbens 22 zur Verfügung. Der Stellkolben 22 besitzt eine Kolbendichtung 27. Die Kolbendichtung 27 teilt im Deckel 25 einen Wirkraum 28 ab, der über einen Anschluß 29 in dauernder Verbindung zu den Luftfederbälgen des Fahrzeuges steht. Der Stellkolben 22 ist im Falle der einkreisigen Ansteuerung mit nur einem Wirkraum 28, wie dargestellt, versehen. Bei zweikreisiger Ansteuerung wird der Stellkolben 22 als Tandemkolben ausgebildet. Er besitzt dann zwei Wirkräume 28, die je mit einem Ansteuerkreis verbunden bzw. von dort beaufschlagt sind. Alternativ kann, auch in dem Deckel 25 integriert, ein Wechselventil vorgesehen sein, dessen zwei Eingänge mit je einem Ansteuerkreis verbunden bzw. von dort beaufschlagt sind. Der Ausgang des Wechselventils ist mit dem Wirkraum 28 verbunden.

Der Stellkolben 22 stützt sich auf einer Regelfeder 30 ab, deren dem Stellkolben 22 zugekehrtes Federende 31 mit dem Stellkolben 22 verdrehgesichert verbunden ist. Das andere Ende der Regelfeder 30 ist auf einem gehäuseseitigen Federauflager (nicht dargestellt) abgestützt, welches verstellbar ausgebildet ist. In der Regel ist ein solches Federauflager in Form einer Gewindemutter vorgesehen, die eine Einstellung der Federrate der Regelfeder 30 einerseits und eine Einstellung der Vorspannung der Regelfeder 30 andererseits gestattet.

Mit dem Stellkolben 22 ist ein Verstellglied 32 verbunden. Auch das Verstellglied 32 ist etwa ring- oder kolbenförmig ausgebildet. Es kann als getrenntes Bauteil hergestellt und mit dem Stellkolben 22 verbunden sein. In besonders einfacher Ausführungsform sind der Stellkolben 22 und das Verstellglied 32 als einstückiger Kunststofformkörper hergestellt. Der Deckel 25 weist in seinem in das Gehäuse 2 hineinreichenden Endbereich einen Schlitz 33 auf. Durch diesen Schlitz 33 des Deckels 25 ragt ein Vorsprung 34. Der Vorsprung 34 durchsetzt auch die Durchbrechung 19. Damit ist das Verstellglied 32 und damit auch der Stellkolben 22 verdrehgesichert im Gehäuse 2 gelagert. Der Fortsatz 34 ist symmetrisch zu einer Ebene durch die Achse 20 (Fig. 2) ausgebildet. Er trägt Anlageflächen 35, die im Falle der formschlüssigen Ausbildung mit einer Verzahnung 36 versehen sind. Die Anlageflächen 35 stellen die Gegenanlagefläche zu den Anlageflächen 23 des Blockierkolbens 15 dar. Es versteht sich, daß die Verzahnung 36 auf die Verzahnung 24 abgestimmt ist. Damit wird erkennbar, daß bei auftretendem Druck in der Bremskammer 13 der Blockierkolben 15 in den Bewegungsweg des Stellkolbens 22 bzw. des Verstellgliedes 32 einfährt und der Stellkolben 22 an einer Bewegung in Richtung der Achse 37 der Regelfeder 30 bzw. des Stellkolbens 22 gehindert ist. Die Achsen 37 und 20 und damit die Bewegungsrichtungen des Stellkolbens 22 und des Blockierkolbens 15 verlaufen rechtwinklig zueinander.

Im mittleren Bereich des Vorsprungs 34 ist eine Schrägfläche 38 gebildet. Die Neigung und Anordnung der Schrägfläche 38 relativ zur Steuerstange 11 ergibt eine Übersetzung der Bewegung des Stellkolbens 22 zur Bewegung der Steuerstange 11. Die Schrägfläche 38 bestimmt den ausgesteuerten Bremsdruck bei leerem Fahrzeug, bei Teilbeladungen und bei voll beladenem Fahrzeug. In Fig. 1 ist die Relativlage bei leerem Fahrzeug dargestellt. Um die Reibung zwischen der Schrägfläche 38 und der Steuerstange 11 gering zu halten, ist im unteren Bereich der Steuerstange 11 eine Rolle 39 gelagert. In Fig. 1 ist die Rolle 39 und der untere Teil der Steuerstange weggebrochen dargestellt, um den Fortsatz 21 des Blockierkolbens 15 und den Vorsprung 34 besser erkennbar zu verdeutlichen.

Im unteren Bereich des Gehäuses 2 ist ein Flatterventil 40 angeordnet, durch welches die Entlüftung der Bremskammer 13 bei geöffnetem Auslaßventil 9, 12 in die Atmosphäre stattfindet.

Im Deckel 25 ist eine Stellschraube 41 mit Hilfe eines Gewindes verstellbar gelagert. Die Stellschraube 41 arbeitet mit einer Rampe der Schrägfläche 38 zusammen und dient in bekannter Weise der Sicherung eines minimalen Bremsdruckes in Höhe des eingestellten Leerbremsdruckes bei Ausfall der Federbalgdrücke.

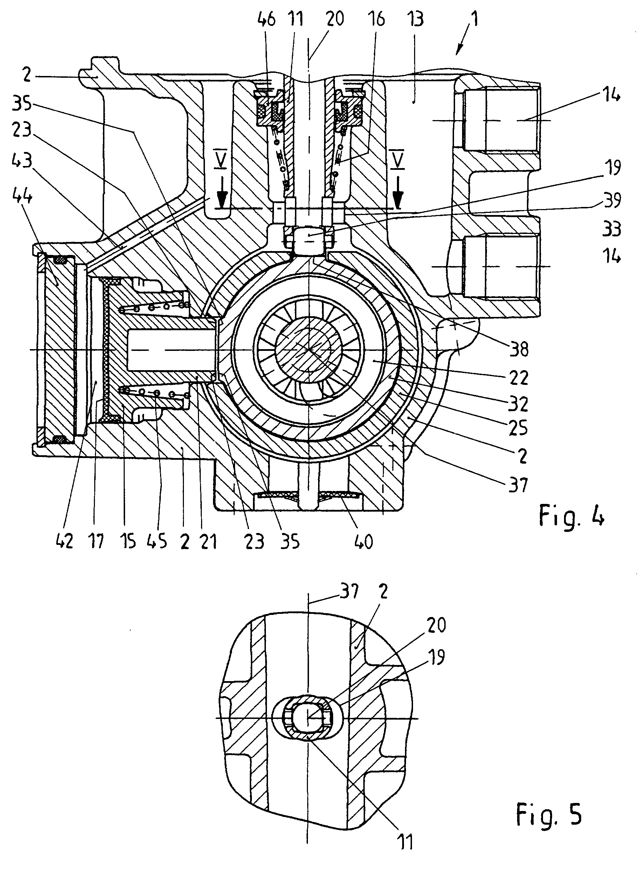

Bei der Ausführungsform des Bremsdruckregelventils 1 gemäß den Fig. 4 und 5 ist der Blockierkolben 15 nicht mehr zu der Achse 20 und die Steuerstange 11 umgebend vorgesehen, sondern gleichsam um 90° um die Achse 37 gedreht angeordnet. Der Blockierkolben 15 ist damit als durchgehender, nicht hohler Kolben ausgebildet. Er ist begrenzt beweglich im Gehäuse 2 gelagert und dichtet mit seiner Manschette 17 einen Wirkraum 42 ab, der über einen Kanal 43 in dauernder Verbindung zu der Bremskammer 13 steht. Andererseits wird der Wirkraum 42 von einem Dichtdeckel 44 gehäuseseitig abgeschlossen. Der Blockierkolben 15 ist hier auf einer gesonderten Feder 45 gehäuseseitig abgestützt, die einen Teil der Funktion der Rückführfeder 16 des Ausführungsbeispieles der Fig. 1 bis 3 übernimmt. Auch bei dem Ausführungsbeispiel der Fig. 4 und 5 besitzt der Blockierkolben 15 Fortsätze 21 mit Anlageflächen 23, denen Anlageflächen 35 an dem Verstellglied 32 zugeordnet sind. Es fehlen hier die Verzahnungen, so daß an diesem Beispiel ein reibschlüssiger Kontakt zwischen den Anlageflächen 23 und 35 zustandekommt.

Um die Steuerstange 11 herum ist hier eine ortsfest gelagerte Trennwand 46 vorgesehen, die mit Dichtungen versehen ist, um die Bremskammer 13 einerseits gehäuseseitig und andererseits gegenüber der verschiebbaren Steuerstange 11 abzudichten. Die Rückführfeder 16, die sich andererseits an der Steuerstange 11 abstützt, hat hier nur die Funktion, die Rolle 39 jederzeit in Anlage an der Schrägfläche 38 zu halten.

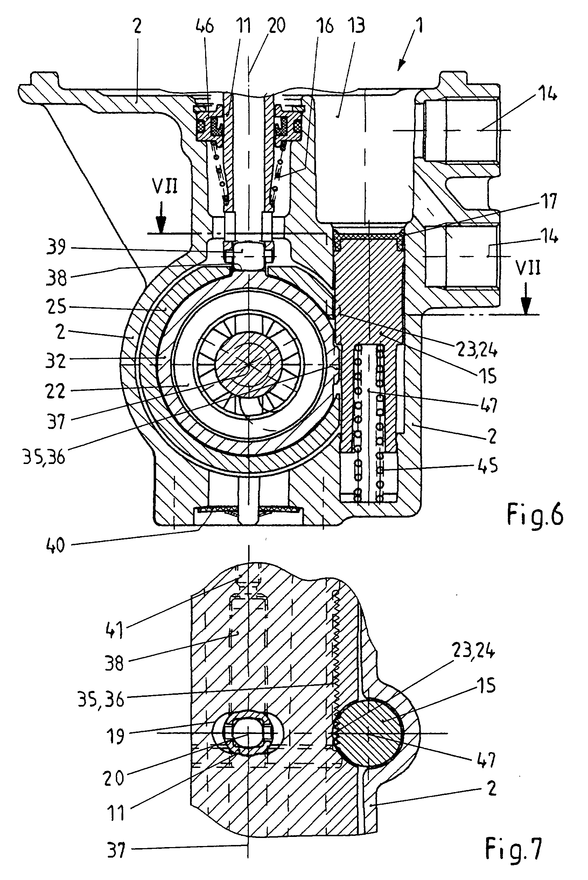

Das Ausführungsbeispiel des Bremsdruckregelventils 1 gemäß den Fig. 6 und 7 gleicht zunächst bezüglich der Anordnung der Trennwand 46 dem Ausführungsbeispiel der Fig. 4 und 5. Der Blockierkolben 15 ist hier jedoch mit seiner Achse 47 nicht radial zum Verstellglied 32 bzw. Stellkolben 22 einfahrbar gelagert, sondern tangential. Die Achsen 47 und 20 sind parallel zueinander ausgerichtet. Das Verstellglied 32 weist die Anlageflächen 35 in tangentialer Erstreckung auf. Hier ist wiederum eine Verzahnung 36 für ein Festsetzen unter Formschluß vorgesehen. Entsprechend ist der Blockierkolben 15 mit Anlageflächen 23 versehen, die eine entsprechende Verzahnung 24 tragen. Fig. 6 zeigt die Relativlage der Teile in drucklosem Zustand.

Bei allen Ausführungsformen wird der Blockierkolben 15 vom ausgesteuerten Druck bei einer Bremsung beaufschlagt und belastet. Insbesondere bei den Ausführungsformen der Fig. 4 bis 7 könnte auch der eingesteuerte Bremsdruck zur Beaufschlagung des Blockierkolbens 15 herangezogen werden, wenn eine noch schnellere Feststellung des Stellkolbens 22 bei einer Bremsung gewünscht wird. In allen Fällen fährt der Blockierkolben 15 in den Bewegungsweg des Stellkolbens 22 ein, und zwar bevor sich eine dynamische Achslastverlagerung bemerkbar gemacht hat. Damit wird ein Bremsdruck von dem Bremsdruckregelventil 1 ausgesteuert, der genau der Beladung des Fahrzeuges entspricht. Zwar wird sich in den Luftfederbälgen eine Veränderung des pneumatischen Druckes bei auftretender dynamischer Achslastverlagerung einstellen. Dieser veränderte Federdruck wird auch im Wirkraum 28 an dem Stellkolben 22 zur Einwirkung gelangen. Die dadurch verursachten Querkräfte werden von dem Blockierkolben 15 aufgenommen und in das Gehäuse 2 abgeleitet, so daß die Steuerstange 11 frei von solchen einwirkenden Querkräften gehalten und in der Durchbrechung 19 gehäuseseitig geführt ist. In der Regel ist der Blockierkolben 15 vom ausgesteuerten Druck in der Bremskammer 13 beaufschlagt. Es ist jedoch auch möglich, dem Blockierkolben 15 einen gesonderten Wirkraum 42 zuzuordnen, der auch von der Bremskammer 13 getrennt sein kann. Es besteht die Möglichkeit, einen solchen von der Bremskammer 13 getrennten Wirkraum 42 auch über einen Steuerdruck zu beaufschlagen, der beispielsweise von einer ABS-Elektronik bereitgestellt wird und der den Fahrzustand des Fahrzeuges im Gegensatz zum Stillstand wiedergibt. Damit wird dann erreicht, daß der Blockierkolben 15 während des Fahrens des Fahrzeuges ständig den Stellkolben 22 festgesetzt hält, während umgekehrt bei Stillstand des Fahrzeuges und während einer Be- oder Entladung eine Bewegung des Stellkolbens 22 gegenüber der Regelfeder 30 möglich ist.

### BEZUGSZEICHENLISTE

- 1: - Bremsdruckregelventil
- 2: - Gehäuse
- 3: - Anschlußdeckel
- 4: - Anschluß
- 5: - Regelteil
- 6: - Regelkolben
- 7: - Einsatzkörper
- 8: - Membrane
- 9: - Doppelventilkörper
- 10: - Rand

- 11: - Steuerstange
- 12: - Sitz
- 13: - Bremskammer
- 14: - Anschluß
- 15: - Blockierkolben
- 16: - Rückführfeder
- 17: - Manschette
- 18: - Stützwand
- 19: - Durchbrechung
- 20: - Achse

- 21: - Fortsatz
- 22: - Stellkolben
- 23: - Anlagefläche
- 24: - Verzahnung
- 25: - Deckel
- 26: - Zylinderbohrung
- 27: - Kolbendichtung
- 28: - Wirkraum
- 29: - Anschluß
- 30: - Regelfeder

- 31: - Federende
- 32: - Verstellglied
- 33: - Schlitz
- 34: - Vorsprung
- 35: - Anlagefläche
- 36: - Verzahnung
- 37: - Achse
- 38: - Schrägfläche
- 39: - Rolle
- 40: - Flatterventil

- 41: - Stellschraube
- 42: - Wirkraum
- 43: - Kanal
- 44: - Dichtdeckel
- 45: - Feder
- 46: - Trennwand
- 47: - Achse

## Patentansprüche

1. Pneumatisch angesteuertes, automatisch lastabhängiges Bremsdruckregelventil (1) für druckmittelbetätigte Bremsanlagen in Fahrzeugen, mit einem vom lastabhängigen Druck beaufschlagten und sich auf einer Regelfeder (30) abstützenden Stellkolben (22), der eine eine Steuerstange (11) des Regelteils (5) des Bremsdruckregelventils (1) steuernde Schrägfläche (38) aufweist, wobei das Bremsdruckregelventil (1) von dynamischer auf statische Wirkungsweise umschaltbar ist, **dadurch gekennzeichnet**, daß ein von einem Druck beaufschlagter Blockierkolben (15) vorgesehen ist und daß der Blockierkolben (15) zum Festsetzen des Stellkolbens (22) unter reib- oder formschlüssiger Verbindung zwischen Blockierkolben (15) und Stellkolben (22) ausgebildet und auf einer Rückführfeder (16) abgestützt ist.

2. Bremsdruckregelventil nach Anspruch 1, **dadurch gekennzeichnet**, daß der Blockierkolben (15) zum Festsetzen des Steuerkolbens (22) in den Bewegungsweg des Stellkolbens (22) einfahrbar gelagert ist.

3. Bremsdruckregelventil nach Anspruch 1 oder 2, **dadurch gekennzeichnet**, daß der Blockierkolben (15) einerseits und der Stellkolben (22) oder ein mit ihm verbundenes Verstellglied (32) andererseits mit einander zugeordneten Anlageflächen (23, 35) versehen sind, die beim Festsetzen aneinander zur Anlage kommen.

4. Bremsdruckregelventil nach Anspruch 3, **dadurch gekennzeichnet**, daß die Anlageflächen (23, 35) mit einer Verzahnung (24, 36) versehen sind.

5. Bremsdruckregelventil nach einem der Ansprüche 1 bis 4, **dadurch gekennzeichnet**, daß der Stellkolben (22) und ein die Schrägfläche (38) aufweisendes Verstellglied (32) einteilig ausgebildet sind, daß der Regelteil (5) des Bremsdruckregelventils (1) ein Einlaßventil (9, 10) und ein Auslaßventil (9, 12) aufweist, daß die den Sitz (12) des Auslaßventils (9, 12) tragende Steuerstange (11) einteilig ausgebildet ist, und daß der Blockierkolben (15) als Ringkolben ausgebildet ist und die Steuerstange (11) umgibt.

6. Bremsdruckregelventil nach Anspruch 3 bis 5, **dadurch gekennzeichnet**, daß die Steuerstange (11) an ihrem der Schrägfläche (38) zugekehrten Ende eine Rolle (39) trägt, daß die Steuerstange (11) verdrehgesichert axialbeweglich ist, und daß die Anlageflächen (23) in symmetrischer Ausbildung zu beiden Seiten der Schrägfläche (38) an dem Blockierkolben (15) vorgesehen sind, wobei der Stellkolben (22) in komplementärer Weise Anlageflächen (35) trägt.

7. Bremsdruckregelventil nach Anspruch 1 und 5, **dadurch gekennzeichnet**, daß die Rückführfeder (16) einerseits auf dem Blockierkolben (15) und andererseits auf der Steuerstange (11) abgestützt ist.

8. Bremsdruckregelventil nach Anspruch 1, **dadurch gekennzeichnet**, daß der Regelteil (5) des Bremsdruckregelventils (1) einen Regelkolben (6) aufweist und die Steuerstange (11) einerseits im Regelkolben (6) und andererseits in einer Durchbrechung (19) des Gehäuses (2) des Bremsdruckregelventils (1) geführt ist.
